(19) **Europäisches Patentamt / European Patent Office / Office européen des brevets**

(11) **EP 4 546 639 A1**

(12) **EUROPEAN PATENT APPLICATION**
published in accordance with Art. 153(4) EPC

(43) Date of publication:
30.04.2025 Bulletin 2025/18

(21) Application number: 22947517.3

(22) Date of filing: 13.07.2022

(51) International Patent Classification (IPC):
*H02P 23/14* (2006.01)

(52) Cooperative Patent Classification (CPC):
G01D 18/008

(86) International application number:
PCT/CN2022/105532

(87) International publication number:
WO 2023/245769 (28.12.2023 Gazette 2023/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.06.2022 CN 202210724099

(71) Applicant: Dongguan Direct Drive Technology
Limited
Dongguan, Guangdong 523000 (CN)

(72) Inventors:
• YU, Yanan
  Dongguan, Guangdong 523000 (CN)
• LIAO, Xuanhong
  Dongguan, Guangdong 523000 (CN)
• LU, Zhenfeng
  Dongguan, Guangdong 523000 (CN)
• SHENG, Liguo
  Dongguan, Guangdong 523000 (CN)

(74) Representative: Cabinet Chaillot
16/20, avenue de l'Agent Sarre
B.P. 74
92703 Colombes Cedex (FR)

(54) **POSITION SENSOR CALIBRATION METHOD AND APPARATUS APPLIED TO ELECTRIC MOTOR**

(57) The present invention relates to the technical field of position calibration, and in particular to a method and a device for calibrating a position sensor applied to a motor. The method comprises acquiring absolute position information of a motor based on feedback of a PWM signal; giving an orthogonal signal to the motor; giving an electrical angle in a first direction to the motor, and recording first relative angles fed back by the orthogonal signal; acquiring a first calibration mapping table for mapping the first relative angles to the electrical angle based on a mapping relation between the first relative angles and the electrical angle; and setting the first calibration mapping table as a mapping table after position sensor calibration to perform calibration; utilizing an absolute lag angle based on feedback of a PWM signal to calibrate relative angle with relatively better real-time performance, in order to avoid step loss.

FIG. 1

## Description

Cross-Reference of Related Application

The application claims priority to a Chinese patent application filed with the Chinese Patent Office on June 24, 2022, with the application number of 202210724099.4, and the title of "Method and Device for Calibrating a Position Sensor Applied to a Motor", which is incorporated herein by reference in its entirety.

## FIELD

The invention relates to the technical field of position calibration, in particular to a method and a device for calibrating a position sensor applied to a motor.

## BACKGROUND

When a high-precision magnetic encoder is used as a position sensor to provide position information for a motor, communication between a motor controller and the position sensor is generally in the following three ways: the first is through SPI, the main issue being that when the position sensor is at a considerable distance from the motor controller, position information is susceptible to interference main problem that when the distance between the position sensor and the motor controller is long, position information is easily disturbed; the second is though PWM communication, which allows for a longer communication distance, but as the positional resolution increases, there is a significant communication lag; the third is through an orthogonal signal, which cannot provide feedback on absolute position information.

## SUMMARY

Therefore, a direct-drive motor using an orthogonal signal cannot be smoothly started; additionally, there is a possibility of step loss through the orthogonal signal.

To solve the above problems, one objective of the invention is to provide a method and a device for calibrating a position sensor applied to a motor, which solve the problems that sensor position calibration is easily disturbed and position information is inaccurate in the prior art, and utilize an absolute lag angle based on feedback of a PWM signal to calibrate relative angle with relatively better real-time performance, in order to avoid step loss.

The objective of the invention may be fulfilled by the following technical solution:

A method for calibrating a position sensor applied to a motor comprises: giving a PWM signal to a motor; obtaining absolute position information of the motor based on feedback of the PWM signal; giving an orthogonal signal to the motor; giving an electrical angle in a first direction to the motor, and recording first relative angles fed back by the orthogonal signal; acquiring a first calibration mapping table for mapping the first relative angles to the electrical angle based on a mapping relation between the first relative angles and the electrical angle; and setting the first calibration mapping table as a mapping table after position sensor calibration to perform calibration.

Details of one or more embodiments of the invention will be provided in the following drawings and description. Other features, objectives and advantages of the invention will become obvious with reference to the description, drawings and claims.

Beneficial Effects

The method for calibrating a position sensor applied to a motor of the present invention solves the problems that sensor position calibration is easily disturbed and position information is inaccurate in the prior art, and comprises: acquiring the absolute position information of the motor based on feedback of the PWM signal; giving the orthogonal signal to the motor; giving the electrical angle in the first direction to the motor, and recording the first relative angles fed back by the orthogonal signal; acquiring the first calibration mapping table for mapping the first relative angles to the electrical angle based on the mapping relation between the first relative angles and the electrical angle; and setting the first calibration mapping table as the mapping table after position sensor calibration to perform calibration.

The device for calibrating a position sensor applied to a motor of the present invention solves the problems that sensor position calibration is easily disturbed and position information is inaccurate in the prior art, and specifically comprises: a first signal module adapted for giving a PWM signal to a motor; an absolute position acquisition module adapted for acquiring absolute position information of the motor based on feedback of the PWM signal; a second signal module adapted for giving an orthogonal signal to the motor; a first angle acquisition module adapted for giving an electrical angle in a first direction to the motor and recording first relative angles fed back by the orthogonal signal; a first mapping acquisition module adapted for acquiring a first calibration mapping table for mapping the first relative angles to the electrical angle based on a mapping relation between the first relative angles and the electrical angle; and a mapping table output module adapted for setting the first calibration mapping table as a mapping table after position sensor calibration to perform calibration, utilizing an absolute lag angle based on feedback of a PWM signal to calibrate relative angle with relatively better real-time performance, in order to avoid step loss.

## BRIEF DESCRIPTION OF THE DRAWINGS

The embodiments and/or examples of the invention disclosed here are better described and explained with reference to one or more accompanying drawings. Additional details or examples for describing the drawings should not be construed as limitations of the scope of any one of the invention disclosed here, the embodiments and/or examples described here, and the current optimal mode of the invention.

In the drawings:

FIG. 1 is a schematic diagram of Embodiment 1 of a method for calibrating a position sensor applied to a motor according to the invention;

FIG. 2 is a schematic diagram of Embodiment 2 of a method for calibrating a position sensor applied to a motor according to the invention;

FIG. 3 is a partial schematic diagram of Embodiment 2 of the method for calibrating a position sensor applied to a motor d according to the invention;

FIG. 4 is a schematic diagram of Embodiment 4 of a method for calibrating a position sensor applied to a motor according to the invention;

FIG. 5 is a partial schematic diagram of Embodiment 4 of a method for calibrating a position sensor applied to a motor according to the invention;

FIG. 6 is a schematic diagram of a device for calibrating a position sensor applied to a motor according to the invention;

FIG. 7 is a schematic diagram of another embodiment of the device for calibrating a position sensor applied to a motor in FIG. 6.

## DESCRIPTION OF THE EMBODIMENTS

To gain a better understanding of the invention, the invention is described more comprehensively below with reference to related drawings. Preferred embodiments of the invention are illustrated by the drawings, but the invention may be implemented in various different forms and is not limited the embodiments described below. On the contrary, these embodiments are provided to allow for a more thorough and comprehensive understanding of the contents disclosed in the invention.

Unless otherwise defined, all technical and scientific terms used here have the same meanings as commonly understood by those skilled in the technical field of the invention. All terms used here are merely for the purpose of describing specific embodiments and are not intended to limit the invention.

PWM belonging to pulse width modulation is an analogue control method, which modulates the bias of a base of a transistor or a gate of an MOS transistor to change the on-time of the transistor or the MOS transistor, so as to realize change of power output. PWM utilizes digital signals of a microprocessor to control an analog circuit.

Embodiment 1

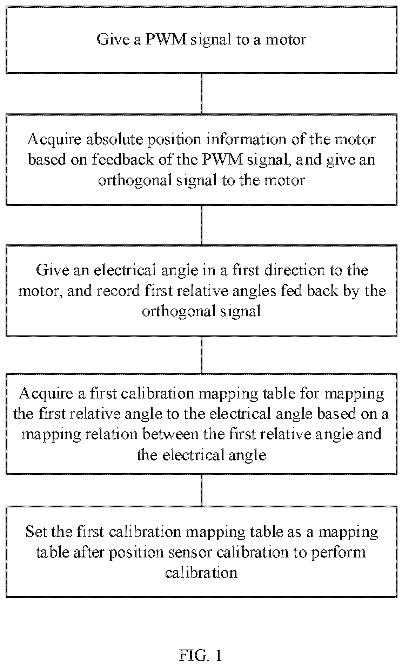

As shown in FIG. 1, an embodiment of a method for calibrating a position sensor applied to a motor is provided and comprises the following steps.

Give a PWM signal to a motor.

Acquire absolute position information of the motor based on feedback of the PWM signal, and give an orthogonal signal to the motor.

Give an electrical angle in a first direction to the motor, and record first relative angles fed back by the orthogonal signal.

Acquire a first calibration mapping table for mapping the first relative angle to the electrical angle based on a mapping relation between the first relative angle and the electrical angle.

Set the first calibration mapping table as a mapping table after position sensor calibration to perform calibration.

In this embodiment, when giving the orthogonal signal to the motor, the orthogonal signal is preferably an orthogonal differential signal, the first direction is either a forward rotation direction or a reverse rotation direction of the motor, and the first calibration mapping table is generated based on the PWM signal and the orthogonal signal in combination with the electrical angle for the motor, and the motor is calibrated by a position sensor based on the first calibration mapping table.

Embodiment 2

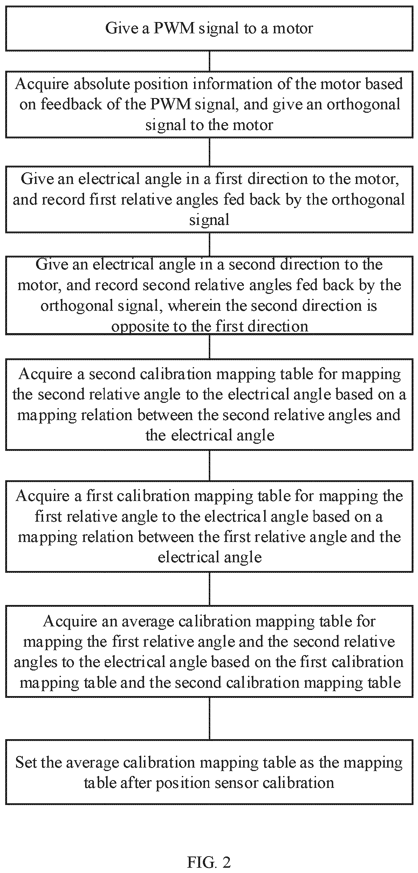

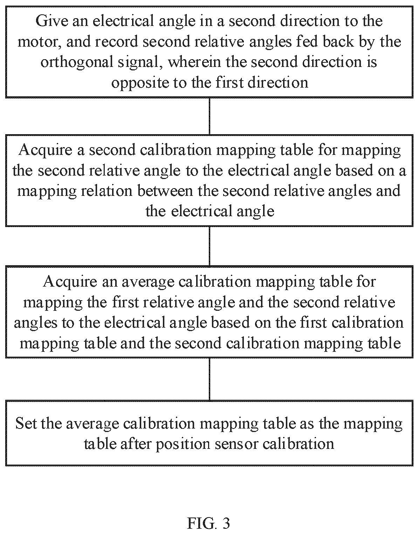

Referring to FIGS. 2-3, an embodiment of a method for calibrating a position sensor applied to a motor is provided, and comprises the following steps.

Give a PWM signal to a motor.

Acquire absolute position information of the motor based on feedback of the PWM signal, and give an orthogonal signal to the motor;

Give an electrical angle in a first direction to the motor, and record first relative angles fed back by the orthogonal signal.

Acquire a first calibration mapping table for mapping the first relative angle to the electrical angle based on a mapping relation between the first relative angle and the electrical angle.

Set the first calibration mapping table as a mapping table after position sensor calibration to perform calibration.

After giving the orthogonal signal to the motor and before outputting an angle calibration mapping table, the method further comprises the following steps.

Give an electrical angle in a second direction to the motor, and record second relative angles fed back by the orthogonal signal, wherein the second direction is opposite to the first direction.

Acquire a second calibration mapping table for mapping the second relative angle to the electrical angle based on a mapping relation between the second relative angles and the electrical angle.

The step of setting the first calibration mapping table as a mapping table after position sensor calibration comprises the following steps.

Acquire an average calibration mapping table for mapping the first relative angle and the second relative angles to the electrical angle based on the first calibration mapping table and the second calibration mapping table.

Sett the average calibration mapping table as the mapping table after position sensor calibration.

Different from Embodiment 1, in this embodiment, the relative angles in the first direction and the second direction are acquired, and the average calibration mapping table acquired by averaging the first calibration mapping table for mapping the first relative angles to the electrical angle and the second calibration mapping table for mapping the second relative angles to the electrical angle is set as the mapping table after position sensor calibration, so as to reduce a given angle error caused by the cogging torque. Compared with Embodiment 1, a more accurate calibration angle can be obtained.

Embodiment 3

Another embodiment of a method for calibrating a position sensor applied to a motor is provided, and comprises the following steps.

Givi a PWM signal to a motor.

Acquiring absolute position information of the motor based on feedback of the PWM signal, and give an orthogonal signal to the motor;
Give an electrical angle in a first direction to the motor, and record first relative angles fed back by the orthogonal signal.

Acquire a first calibration mapping table for mapping the first relative angle to the electrical angle based on a mapping relation between the first relative angle and the electrical angle.

Set the first calibration mapping table as a mapping table after position sensor calibration to perform calibration.

After giving the orthogonal signal to the motor and before outputting an angle calibration mapping table, the method further comprises the following steps.

Give an electrical angle in a second direction to the motor, record second relative angles fed back by the orthogonal signal, wherein the second direction is opposite to the first direction.

Acquire a second calibration mapping table for mapping the second relative angles to the electrical angle based on a mapping relation between the second relative angles and the electrical angle.

The step of setting the first calibration mapping table as a mapping table after position sensor calibration comprises the following steps.

Acquire an average calibration mapping table for mapping the first relative angles and the second relative angles to the electrical angle based on the first calibration mapping table and the second calibration mapping table.

Set the average calibration mapping table as the mapping table after position sensor calibration.

The step of acquiring the average calibration mapping table for mapping the first relative angles and the second relative angles to the electrical angle comprises the follow steps.

Calculate third relative angles corresponding to the electrical angle in the average calibration mapping table, based on a formula $x_n = \frac{b_n + c_n}{2}$, wherein $x_1 ... x_n$ are the third relative angles, $b_1 ... b_n$ are the first relative angles, and $c_1 ... c_n$ are the second relative angles.

In this embodiment, the third relative angles corresponding to the electrical angle in the average calibration mapping table are calculated by a formula, and the average calibration mapping table is acquired to reduce a given angle error caused by the cogging torque.

Embodiment 4

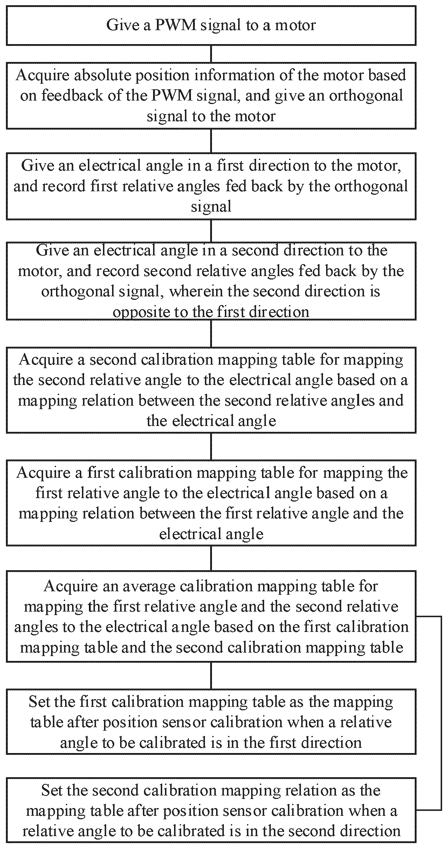

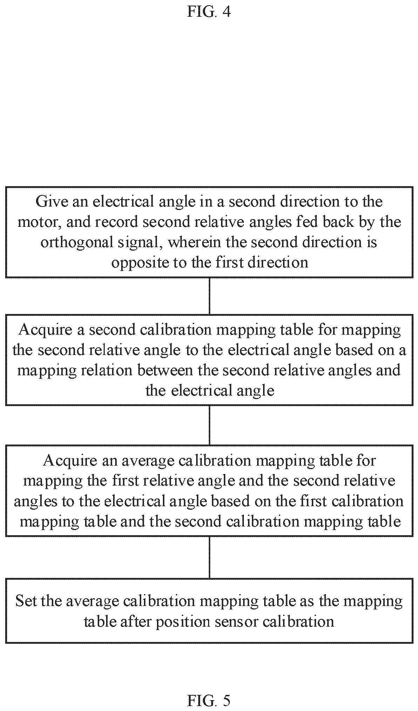

Referring to FIGS. 4-5, another embodiment of a method for calibrating a position sensor applied to a motor is provided, and comprises the following steps.

Give a PWM signal to a motor.

Acquire absolute position information of the motor based on feedback of the PWM signal, and give an orthogonal signal to the motor.

Give an electrical angle in a first direction to the motor, and record first relative angles fed back by the orthogonal signal.

Acquire a first calibration mapping table for mapping the first relative angles to the electrical angle based on a mapping relation between the first relative angles and the electrical angle.

Set the first calibration mapping table as a mapping table after position sensor calibration to perform calibration.

After giving the orthogonal signal to the motor and before outputting the angle calibration mapping table, the method further comprises the following steps.

Give the electrical angle in a second direction to the motor, and record second relative angles fed back by the orthogonal signal, wherein the second direction is opposite to the first direction.

Acquire a second calibration mapping table for mapping the second relative angles to the electrical angle based on a mapping relation between the second relative angles and the electrical angle.

The step of setting the first calibration mapping table as a mapping table after position sensor calibration comprises the following steps.

Set the first calibration mapping table as the mapping table after position sensor calibration when a relative angle to be calibrated is in the first direction.

Set the second calibration mapping relation as the mapping table after position sensor calibration when a relative angle to be calibrated is in the second direction.

In any one of the above embodiments, the method further comprises the following step.

Calculate an electrical angle corresponding to adjacent relative angles $x_n$ and $x_{n+1}$ based on a formula

$$Y = \frac{y_{n+1} - y_n}{x_{n+1} - x_n} X + y_n$$

, wherein variable X is the relative angle, variable Y is the electrical angle, and $y_n$ and $y_{n+1}$ are respectively the electrical angles corresponding to $x_n$ and $x_{n+1}$.

In any one of the above embodiments, the larger the electrical angle is, the more accurate the mapping table is. However, considering that the calibration time in actual production should not be too long, which may otherwise affect mass production, the electrical angle is preferably 360° to guarantee an appropriate calibration time and the accuracy of the mapping table and keep an error within an acceptable range.

In the above embodiments, the electrical angle is the angle value to which the motor is continuously reached from 0, so as to obtain a series of first relative angles.

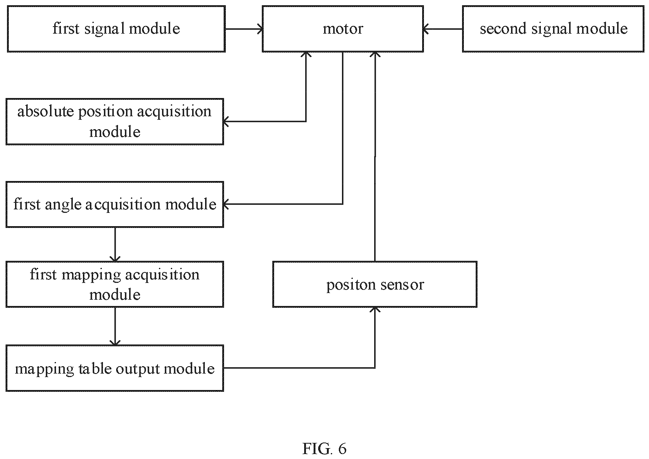

Referring to FIG. 6, a device for calibrating a position sensor applied to a motor comprises:

a first signal module adapted for giving a PWM signal to a motor;

an absolute position acquisition module adapted for acquiring absolute position information of the motor based on feedback of the PWM signal;

a second signal module adapted for giving an orthogonal signal to the motor;

a first angle acquisition module adapted for giving an electrical angle in a first direction to the motor and recording a first relative angle fed back by the orthogonal signal;

a first mapping acquisition module adapted for acquiring a first calibration mapping table for mapping the first relative angle to the electrical angle based on a mapping relation between the first relative angle and the electrical angle; and

a mapping table output module adapted for setting the first calibration mapping table as a mapping table after position sensor calibration to perform calibration.

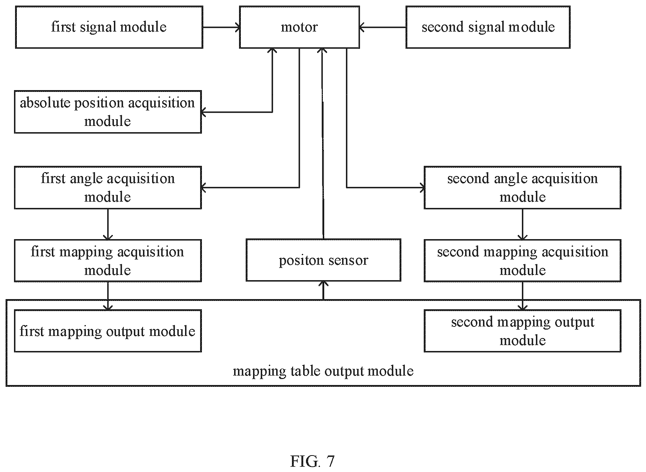

Referring to FIG. 7, in another embodiment, a device for calibrating a position sensor applied to a motor comprises:

a first signal module adapted for giving a PWM signal to a motor;

an absolute position acquisition module adapted for acquiring absolute position information of the motor based on feedback of the PWM signal;

a second signal module adapted for giving an orthogonal signal to the motor;

a first angle acquisition module adapted for giving an electrical angle in a first direction to the motor and recording first relative angles fed back by the orthogonal signal;

a first mapping acquisition module adapted for acquiring a first calibration mapping table for mapping the first relative angles to the electrical angle based on a mapping relation between the first relative angles and the electrical angle; and

a mapping table output module adapted for setting the first calibration mapping table as a mapping table after position sensor calibration to perform calibration.

The position sensor calibration device further comprises:

a second angle acquisition module adapted for giving the electrical angle of the motor in a second direction and recording second relative angles fed back by the orthogonal signal, wherein the second direction is opposite to the first direction; and

a second mapping acquisition module adapted for acquiring a second calibration mapping table for mapping the second relative angles to the electrical angle according to a mapping relation between the second relative angles and the electrical angle.

The mapping table output module comprises:

a first mapping output module adapted for setting the first calibration mapping table as the mapping table after position sensor calibration when a relative angle to be calibrated is in the first direction; and

a second mapping output module adapted for setting the second calibration mapping relation as the mapping table after position sensor calibration when a relative angle to be calibrated is in the second direction.

The electrical angle is the angle value to which the motor is continuously reached from 0, so as to obtain a series of first relative angles.

In any one of the above embodiments, the larger the electrical angle is, the more accurate the mapping table is. However, considering that the calibration time in actual production should not be too long, which may otherwise affect mass production, the electrical angle is preferably 360° to guarantee an appropriate calibration time and the accuracy of the mapping table and keep an error within an acceptable range.

In the above embodiments, the electrical angle is the angle value to which the motor is continuously reached from 0, so as to obtain a series of first relative angles.

The above embodiments merely expound several implementations of the invention and are specifically described in detail, but they should not be construed as limitations of the patent scope of the invention. It should be noted that those ordinarily skilled in the art can make some transformations and improvements without departing from the concept of the invention, and all these transformations and improvements should also fall within the protection scope of the invention. Therefore, the protection scope of the invention should be defined by the appended claims.

**Claims**

1. A method for calibrating a position sensor applied to a motor, comprising:

   giving a PWM signal to a motor;
   acquiring absolute position information of the motor based on feedback of the PWM signal;
   giving an orthogonal signal to the motor;
   giving an electrical angle in a first direction to the motor, and recording first relative angles fed back by the orthogonal signal;
   acquiring a first calibration mapping table for mapping the first relative angles to the electrical angle based on a mapping relation between the first relative angles and the electrical angle; and
   setting the first calibration mapping table as a mapping table after position sensor calibration to perform calibration.

2. The method for calibrating a position sensor applied to a motor according to Claim 1, wherein after giving the orthogonal signal to the motor and before outputting the angle calibration mapping table, the method further comprises:

   giving an electrical angle in a second direction to the motor, and recording a second relative angle fed back by the orthogonal signal, wherein the second direction is opposite to the first direction; and

   acquiring a second calibration mapping table for mapping the second relative angles to the electrical angle based on a mapping relation between the second relative angles and the electrical angle;
   wherein the step of setting the first calibration mapping table as a mapping table after position sensor calibration comprises:

   acquiring an average calibration mapping table for mapping the first relative angles and the second relative angles to the electrical angle based on the first calibration mapping table and the second calibration mapping table; and
   setting the average calibration mapping table as the mapping table after position sensor calibration.

3. The method for calibrating a position sensor applied to a motor according to Claim 2, wherein the step of acquiring an average calibration mapping table for mapping the first relative angles and the second relative angles to the electrical angle comprises:
   Calculating third relative angles corresponding to the electrical angle in the average calibration mapping table, based on a formula $x_n = \frac{b_n + c_n}{2}$, wherein $x_1 ... x_n$ are the third relative angles, $b_1 ... b_n$ are the first relative angles, and $c_1 ... c_n$ are the second relative angles.

4. The method for calibrating a position sensor applied to a motor according to Claim 1, wherein after giving the orthogonal signal to the motor and before outputting an angle calibration mapping table, the method further comprises:

   giving an electrical angle in a second direction to the motor, and recording second relative angles fed back by the orthogonal signal, wherein the second direction is opposite to the first direction; and
   acquiring a second calibration mapping table for mapping the second relative angles to the electrical angle based on a mapping relation between the second relative angles and the electrical angle;
   the step of setting the first calibration mapping table as a mapping table after position sensor calibration comprises:

   setting the first calibration mapping table as the mapping table after position sensor calibration when a relative angle to be calibrated is in the first direction; and
   setting the second calibration mapping relation as the mapping table after position sensor calibration when a relative angle to be calibrated is in the second direction.

5. The method for calibrating a position sensor applied to a motor according to Claim 1, wherein the electrical angle is 360°.

6. The method for calibrating a position sensor applied to a motor according to any one of Claims 1-5, further comprising:
calculating an electrical angle corresponding to adjacent relative angles $x_n$ and $x_{n+1}$ according to a formula $Y = \frac{y_{n+1}-y_n}{x_{n+1}-x_n}X + y_n$ , wherein variable X is the relative angle, variable Y is the electrical angle, and $y_n$ and $y_{n+1}$ are respectively the electrical angles corresponding to $x_n$ and $x_{n+1}$.

7. A device for calibrating a position sensor applied to a motor, comprising:

a first signal module adapted for giving a PWM signal to a motor;
an absolute position acquisition module adapted for acquiring absolute position information of the motor based on feedback of the PWM signal;
a second signal module adapted for giving an orthogonal signal to the motor;
a first angle acquisition module adapted for giving an electrical angle to the motor in a first direction and recording first relative angles fed back by the orthogonal signal;
a first mapping acquisition module adapted for acquiring a first calibration mapping table for mapping the first relative angles to the electrical angle based on a mapping relation between the first relative angles and the electrical angle; and
a mapping table output module adapted for setting the first calibration mapping table as a mapping table after position sensor calibration to perform calibration.

8. The device for calibrating a position sensor applied to a motor according to Claim 7, further comprising:

a second angle acquisition module adapted for giving an electrical angle in a second direction to the motor and recording second relative angles fed back by the orthogonal signal, wherein the second direction is opposite to the first direction; and
a second mapping acquisition module adapted for acquiring a second calibration mapping table for mapping the second relative angles to the electrical angle based on a mapping relation between the second relative angles and the electrical angle;
wherein the mapping table output module comprises:

a first mapping output module adapted for setting the first calibration mapping table as the mapping table after position sensor calibration when a relative angle to be calibrated is in the first direction; and
a second mapping table output module adapted for setting the second calibration mapping relation as the mapping table after position sensor calibration when a relative angle to be calibrated is in the second direction.

Give a PWM signal to a motor

Acquire absolute position information of the motor based on feedback of the PWM signal, and give an orthogonal signal to the motor

Give an electrical angle in a first direction to the motor, and record first relative angles fed back by the orthogonal signal

Acquire a first calibration mapping table for mapping the first relative angle to the electrical angle based on a mapping relation between the first relative angle and the electrical angle

Set the first calibration mapping table as a mapping table after position sensor calibration to perform calibration

FIG. 1

Give a PWM signal to a motor

Acquire absolute position information of the motor based on feedback of the PWM signal, and give an orthogonal signal to the motor

Give an electrical angle in a first direction to the motor, and record first relative angles fed back by the orthogonal signal

Give an electrical angle in a second direction to the motor, and record second relative angles fed back by the orthogonal signal, wherein the second direction is opposite to the first direction

Acquire a second calibration mapping table for mapping the second relative angle to the electrical angle based on a mapping relation between the second relative angles and the electrical angle

Acquire a first calibration mapping table for mapping the first relative angle to the electrical angle based on a mapping relation between the first relative angle and the electrical angle

Acquire an average calibration mapping table for mapping the first relative angle and the second relative angles to the electrical angle based on the first calibration mapping table and the second calibration mapping table

Set the average calibration mapping table as the mapping table after position sensor calibration

FIG. 2

Give an electrical angle in a second direction to the motor, and record second relative angles fed back by the orthogonal signal, wherein the second direction is opposite to the first direction

Acquire a second calibration mapping table for mapping the second relative angle to the electrical angle based on a mapping relation between the second relative angles and the electrical angle

Acquire an average calibration mapping table for mapping the first relative angle and the second relative angles to the electrical angle based on the first calibration mapping table and the second calibration mapping table

Set the average calibration mapping table as the mapping table after position sensor calibration

FIG. 3

Give a PWM signal to a motor

Acquire absolute position information of the motor based on feedback of the PWM signal, and give an orthogonal signal to the motor

Give an electrical angle in a first direction to the motor, and record first relative angles fed back by the orthogonal signal

Give an electrical angle in a second direction to the motor, and record second relative angles fed back by the orthogonal signal, wherein the second direction is opposite to the first direction

Acquire a second calibration mapping table for mapping the second relative angle to the electrical angle based on a mapping relation between the second relative angles and the electrical angle

Acquire a first calibration mapping table for mapping the first relative angle to the electrical angle based on a mapping relation between the first relative angle and the electrical angle

Acquire an average calibration mapping table for mapping the first relative angle and the second relative angles to the electrical angle based on the first calibration mapping table and the second calibration mapping table

Set the first calibration mapping table as the mapping table after position sensor calibration when a relative angle to be calibrated is in the first direction

Set the second calibration mapping relation as the mapping table after position sensor calibration when a relative angle to be calibrated is in the second direction

FIG. 4

Give an electrical angle in a second direction to the motor, and record second relative angles fed back by the orthogonal signal, wherein the second direction is opposite to the first direction

Acquire a second calibration mapping table for mapping the second relative angle to the electrical angle based on a mapping relation between the second relative angles and the electrical angle

Acquire an average calibration mapping table for mapping the first relative angle and the second relative angles to the electrical angle based on the first calibration mapping table and the second calibration mapping table

Set the average calibration mapping table as the mapping table after position sensor calibration

FIG. 5

FIG. 6

FIG. 7

| INTERNATIONAL SEARCH REPORT | International application No. |
|---|---|
| | **PCT/CN2022/105532** |

**A. CLASSIFICATION OF SUBJECT MATTER**

H02P 23/14(2006.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNPAT, CNKI, WPI, EPODOC: 马达, 电动机, 电机, 电角度, 绝对位置, 相对位置, 传感器, 编码器, 校准, 校正, 修正, 补偿, 正交, 对应, 映射, motor, angle, sensor, encoder, absolute position, relative position, calibrat+, correct+, compensat+, pwm orthogonal, mapping, correspond+

**C. DOCUMENTS CONSIDERED TO BE RELEVANT**

| Category* | Citation of document, with indication, where appropriate, of the relevant passages | Relevant to claim No. |
|---|---|---|
| A | CN 109039198 A (HANGZHOU SILAN MICROELECTRONICS CO., LTD. et al.) 18 December 2018 (2018-12-18)<br>description, paragraphs [0063]-[0132], and figures 1-7 | 1-8 |
| A | CN 112304210 A (SHAANXI HONGXING ELECTRONIC COMPONENTS CO., LTD.) 02 February 2021 (2021-02-02)<br>entire document | 1-8 |
| A | CN 109655083 A (XAG CO., LTD.) 19 April 2019 (2019-04-19)<br>entire document | 1-8 |
| A | CN 107076020 A (HITACHI AUTOMOTIVE SYSTEMS, LTD.) 18 August 2017 (2017-08-18)<br>entire document | 1-8 |
| A | CN 107919830 A (SAIC MOTOR CORP., LTD.) 17 April 2018 (2018-04-17)<br>entire document | 1-8 |
| A | US 2019131898 A1 (CRESTRON ELECTRONICS, INC.) 02 May 2019 (2019-05-02)<br>entire document | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/105532**

| Patent document cited in search report | | | Publication date (day/month/year) | Patent family member(s) | | | Publication date (day/month/year) |
|---|---|---|---|---|---|---|---|
| CN | 109039198 | A | 18 December 2018 | None | | | |
| CN | 112304210 | A | 02 February 2021 | None | | | |
| CN | 109655083 | A | 19 April 2019 | None | | | |
| CN | 107076020 | A | 18 August 2017 | WO | 2016072454 | A1 | 12 May 2016 |
| | | | | JP | 2016089715 | A | 23 May 2016 |
| | | | | US | 2017298845 | A1 | 19 October 2017 |
| | | | | EP | 3216998 | A1 | 13 September 2017 |
| CN | 107919830 | A | 17 April 2018 | None | | | |
| US | 2019131898 | A1 | 02 May 2019 | None | | | |

Form PCT/ISA/210 (patent family annex) (January 2015)

**REFERENCES CITED IN THE DESCRIPTION**

**Patent documents cited in the description**

- CN 202210724099